# EUROPÄISCHE PATENTSCHRIFT

(11) **EP 0 670 188 B1**
(45) Veröffentlichungstag und Bekanntmachung des Hinweises auf die Patenterteilung: **10.03.1999**
(21) Anmeldenummer: 95100760.8
(22) Anmeldetag: 20.01.1995
(51) Int. Cl.: B09B 3/00, C22B 7/02

(54) **Verfahren zum simultanen Einschmelzen von Staubeinschmelzgut und von stückiger Rostschlacke aus Müllverbrennungsanlagen**
Process for the simultaneous melting of powdery materials and lump slags from refuse incinerating installations
Procédé pour la fusion simultanée des produits pulvérulents et des cendres en morceaux provenant d'usines d'incinération d'ordures ménagères

(30) Priorität: 03.03.1994 DE 4406898
(43) Veröffentlichungstag der Anmeldung: 06.09.1995
(73) Patentinhaber: RWE Energie Aktiengesellschaft, 45128 Essen (DE); MANNESMANN Aktiengesellschaft, 40213 Düsseldorf (DE)
(72) Erfinder: Bullmann, Guido, Dr.-Ing., D-40128 Essen (DE)
(74) Vertreter: Meissner, Peter E., Dipl.-Ing.

(56) Entgegenhaltungen:
- EP-A- 0 335 033
- EP-A- 0 515 792
- EP-A- 0 579 591
- WO-A-93/20252
- DE-A- 3 326 505
- DE-B- 2 521 873
- DE-C- 4 204 769
- ERZMETALL, Bd. 43,Nr. 2, Februar 1990 WEINHEIM, DE, Seiten 81-85, G. RATH 'Der Elektroreduktionsofen .....'
- BUNDESGESETZBLATT, 5.12.1990, BONN, DE, Seiten 2600-2629, 'Verordnung zur Änderung der Trinkwasserverordnung .....'

## Beschreibung

Die Erfindung betrifft ein Verfahren zum simultanen Einschmelzen von Staubeinschmelzgut und von stückiger Rostschlacke aus Müllverbrennungsanlagen in einem geschlossenen Elektroniederschachtofen, der über seiner Herdsohle ein Schlackeschmelzbad mit einer Koksabdeckung aufweist, in welches Schlackeschmelzebad zumindest eine Elektrode eintaucht. Simultan bedeutet im Rahmen der Erfindung grundsätzlich gleichzeitig, aber mit getrennten Einrichtungen. Die Gleichzeitigkeit kann in dem Elektroniederschachtofen am gleichen Ort, aber auch mit verschiedenen Einführungsorten erfolgen.

Im Rahmen der Erfindung bezeichnet "geschlossener Elektroniederschachtofen" Ofenaggregate, die zur Metallgewinnung aus armen Erzen, d.h. bei schlackereichen Schmelzverfahren, üblich sind. Sie sind an das erfindungsgemäße Verfahren zur simultanen Einschmelzung von Staubeinschmelzgut und stückiger Rostschlacke ohne Schwierigkeiten adaptierbar. Staubeinschmelzgut bezeichnet Flugasche und andere Flugstäube, wie sie bei Verbrennungsanlagen freigesetzt werden und bei der Rauchgasreinigung anfallen. Staubeinschmelzgut bezeichnet im Rahmen der Erfindung aber auch Koks, Klärschlamm, Asche und ähnliche Stoffe in entsprechend feinteiliger Form. Typische Zusammensetzungen von Staubeinschmelzgut, wie es bei Müllverbrennungsanlagen anfällt, sind bekannt. Rostschlacke bezeichnet Schlacken, wie sie, neben Rostasche, im Rostbereich von Verbrennungsanlagen anfallen. Typische Zusammensetzungen von Rostschlacken, wie sie bei Müllverbrennungsanlagen anfallen, sind ebenfalls bekannt. Sie bedürfen der Entsorgung.

Die Erfindung geht aus von einem Verfahren zur Beseitigung von staubförmigen Stoffen aus Müllverbrennungsanlagen durch Einschmelzen (DE 42 04 769 C1). Bei diesem Verfahren wird für das Einschmelzen ein geschlossener Elektroniederschachtofen mit zumindest einer Elektrode verwendet, in dem Elektroniederschachtofen wird ein Bad aus einer Schlackeschmelze erzeugt und durch die Zuführung von elektrischer Energie aufrechterhalten. Die staubförmigen Stoffe werden mit einer Tauchlanze oder mit Hilfe einer hohlen Tauchelektrode in das Bad eingeführt. Die einschmelzfähigen Bestandteile der staubförmigen Stoffe werden in die Schlacke eingebunden. Die Schlacke mit den eingebundenen Bestandteilen wird kontinuierlich oder von Zeit zu Zeit abgezogen, die entstehenden Abgase werden einer Abgasreinigung unterworfen. Bei diesem bekannten Verfahren ist das Bad mit einer Koksschicht abgedeckt und die einzuschmelzenden staubförmigen Stoffe werden unter der Koksschicht in das Schmelzebad eingeführt. Das Einschmelzen der Stoffe erfolgt unter reduzierenden Bedingungen, die in der Schlacke eingestellt werden. Diese bekannten Maßnahmen haben sich bewährt. Im Rahmen der bekannten Maßnahmen kann das Staubeinschmelzgut auch Rostasche aufweisen. Die Rostasche und, falls auch Rostschlacke beigegeben wird, die Rostschlacke müssen zunächst staubfein aufgemahlen werden. Das ist aufwendig. Sollen das Staubeinschmelzgut und die Rostschlacke gleichzeitig zugeführt werden, so müssen diese Komponenten zuvor gemischt werden. Im übrigen entstehen Massenprobleme, weil beim Betrieb von Müllverbrennungsanlagen die anfallende Masse an Rostschlacke etwa um einen Faktor 10 größer ist als die anfallende Masse der bei der Müllverbrennung anfallenden Flugasche und sonstigen Flugstäube.

Der Erfindung liegt das technische Problem zugrunde, das vorstehend beschriebene Verfahren (DE 42 04 769 C1) so weiter zu entwickeln, daß beim Betrieb einer Müllverbrennungsanlage zusammen mit dem Staubeinschmelzgut auch große Massenanteile von Rostschlacke auf einfache Weise eingeschmolzen werden können.

Zur Lösung dieses technischen Problems ist Gegenstand der Erfindung ein Verfahren zum simultanen Einschmelzen von Staubeinschmelzgut und von stückiger Rostschlacke aus Müllverbrennungsanlagen in einem geschlossenen Elektroniederschachtofen, der über seiner Herdsohle ein Schlackeschmelzbad mit einer Koksabdeckung aufweist, in welches Schlackeschmelzbad zumindest eine Elektrode eintaucht, mit den folgenden Verfahrensschritten:
a) Das Staubeinschmelzgut wird mit Hilfe einer hohlen Tauchelektrode und/oder einer Tauchlanze in das Schlackeschmelzbad pneumatisch eingetragen,
b) die Rostschlacke wird mit Hilfe eines Förderrohres, welches oberhalb des Schlackeschmelzbades endet, in den Elektroniederschachtofen eingebracht,
c) der Elektroniederschachtofen wird unter reduzierenden Bedingungen im Schmelzteil betrieben,
wobei zur Aufrechterhaltung der reduzierenden Bedingungen im Schmelzteil mit einer Kohlenstoffbilanz gearbeitet wird, welche den Kohlenstoff, den das Staubeinschmelzgut und/oder die Rostschlacke mitbringen, und erforderlichenfalls eine Kohlenstoffzugabe berücksichtigt, und wobei die Massenverhältnisse so eingestellt werden, daß das Schlackeglaseluat (nach Verbringen der Schlacke in eine Deponie) den im Patentanspruch 1 angegebenen Vorschriften entspricht. Um dieses zu erreichen, können auch Zusatzstoffe, z.B. glasbildende Zusatzstoffe, eingeschmolzen werden. Nach bevorzugter Ausführungsform der Erfindung werden das Staubeinschmelzgut einerseits und die stückige Rostschlacke andererseits massenmäßig etwa im Verhältnis 1:10 in den Elektroniederschachtofen eingeführt, was überraschenderweise problemlos möglich ist.

Eine Anlage für die Durchführung des Verfachrens ist in Anspruch 13 definiert.

Die Erfindung geht von der Erkenntnis aus, daß bei einer Müllverbrennungsanlage das Staubeinschmelzgut sowie die Rostschlacke gleichzeitig in den Elektroniederschachtofen eingegeben und dort eingeschmolzen werden können, obgleich diese Verbrennungsrückstände vom Habitus sowie von der Zusammensetzung her sehr verschiedene Stoffe sind. Überraschenderweise vereinigen sie sich bei entsprechender Abstimmung in dem Elektroniederschachtofen zu einer Mischschmelze, die durch die Verfahrensführung und durch die Ofenführung auf einfache Weise so eingestellt werden kann, daß das Schlackeglaseluat die Vorschriften der Trinkwasserversorgung erfüllt. Es ist folglich nicht mehr erforderlich, die bei dem erfindungsgemäßen Verfahren anfallende Schlacke auf Sonderdeponien zu verbringen. Eine freizügige Verwendung der anfallenden Schlacke, z.B. in der Bauindustrie, ist möglich. Die zur Erzielung einer solchen Schlacke erforderliche Verfahrensführung und Ofenführung läßt sich leicht experimentell ermitteln, wobei die Einstellung des Mischungsverhältnisses der Einstandsstoffe von Bedeutung ist.

Nach einer bevorzugten Ausführungsform der Erfindung wird das Schlackeschmelzbad mit einer Feinkoksschicht von zumindest 50 mm Schichtdicke abgedeckt. Nach bevorzugter Ausführungsform der Erfindung wird fernerhin in den Oberofen, oberhalb der Koksabdeckung, Oxidationsluft eingeführt und werden dadurch oxidierbare Bestandteile der Ofenatmosphäre oxidiert oder teiloxidiert. Nach Maßgabe des Verbrauchs des Kohlenstoffes in der Koksabdeckung kann Koks zusammen mit der Rostschlacke auf einfache Weise nachgespeist werden.

Im Rahmen des erfindungsgemaßen Verfahrens können die Reduktionsbedingungen im Oberofen durch den Kohlenstoffgehalt des Staubeinschmelzgutes weitgehend aufrechterhalten und eingestellt werden. Aber auch der Kohlenstoffgehalt, den die Rostschlacke mitbringt, trägt zur Aufrechterhaltung der Reduktionsbedingungen bei. Erforderlichenfalls werden die Reduktionsbedingungen durch eine Kohlenstoffzugabe eingestellt. Neben der Reduktionswirkung über die gesamte Schlackenoberfläche dient die Koksschicht bzw. die Feinkoksschicht der Verhinderung des Eintretens von Schlackespritzern in den Oberofen hinein. Der stetige Verbrauch der Koksabdeckung durch aufsteigende Reduktionsgase aus dem Unterofen sowie auch eine gewisse Oxidation durch die eingesaugte Oxidationsluft im Oberofen wird zweckmäßigerweise in der beschriebenen Weise ausgeglichen. Der in der Rostschlacke eingebundene Kohlenstoffgehalt, der etwa 5 Masse% ausmacht, trägt zur Reduktion der Schlacke bei und verbraucht sich bei den Schmelzetemperaturen des Elektroniederschachtofens unter Entwicklung von Kohlenmonoxid und Kohlendioxid. Dadurch wird eine Ausgasung der reduzierten Metalle mit hohem Dampfdruck zusätzlich begünstigt, was insbesondere für Blei, Zinn, Cadmium gilt. Auf diese Weise wird verständlich, daß bei dem erfindungsgemäßen Verfahren die abgezogene Schlacke eine überraschend große Schadstofffreiheit aufweist. Das im Rahmen des erfindungsgemäßen Verfahrens erhaltene Schlackenglas ist wegen seiner günstigen Eluatwerte freizügig verwendbar. Man kann erfindungsgemäß eine schwermetallfreie Schlacke mit vorzüglichem Eluatverhalten erzeugen.

Im einzelnen bestehen im Rahmen der Erfindung mehrere Möglichkeiten der weiteren Ausbildung und Gestaltung des Verfahrens. Die Schlacke kann aus dem Schlackeschmelzbad nach Maßgabe des Einschmelzvorganges kontinuierlich oder batchweise abgezogen werden. Eine unter dem Schlackeschmelzbad sich ansammelnde Metallschmelze läßt sich ebenfalls nach Maßgabe des Einschmelzvorganges kontinuierlich oder batchweise abziehen. Dazu müssen nach Maßgabe der Einschmelztemperatur erforderlichenfalls den Schmelzpunkt reduzierende Zusätze beigegeben werden, was zusammen mit der Rostschlacke erfolgen kann.

Im Rahmen der Erfindung kann mit einem Dreielektrodenofen mit Drehstrom gearbeitet werden. Man kann aber auch mit Wechselstrom- sowie einem Zweielektrodenofen oder einem Einelektrodenofen arbeiten. Um im Schlackeschmelzbad eine gute Durchmischung zu erreichen, empfiehlt es sich, mit einem Elektroniederschachtofen zu arbeiten, der zusätzlich bodenblasende Düsen aufweist.

Bei dem erfindungsgemäßen Verfahren ist es zweckmäßig, die Rostschlacke und ggf. auch das Staubeinschmelzgut vorzuwärmen. Dazu empfiehlt die Erfindung, daß das heiße Abgas aus dem Elektroniederschachtofen über einen Wärmetauscher und eine Abgasreinigungsanlage geführt und danach in die Atmosphäre abgeblasen wird, wobei die über den Wärmetauscher gewonnene Wärmeenergie zur Vorwärmung der Rostschlacke verwendet wird, aber auch zur Vorwärmung des Staubeinschmelzgutes verwendet werden kann. Entsprechend kann die aus dem Elektroniederschachtofen abgezogene Schlacke gekühlt und die dabei von dem Kühlmittel aufgenommene Wärmeenergie kann zur Vorwärmung der Rostschlacke und ggf. auch des Staubeinschmelzgutes eingesetzt werden.

Im folgenden werden das erfindungsgemäße Verfahren und Merkmale, die Anlagen zur Durchführung des Verfahrens betreffen, anhand einer lediglich ein Ausführungsbeispiel darstellenden Zeichnung ausführlicher erläutert. Es zeigen in schematischer Darstellung
- Fig. 1: einen Vertikalschnitt durch einen Elektroniederschachtofen, der für das erfindungsgemäße Verfahren eingerichtet ist,
- Fig. 2: das Schema einer Draufsicht auf den Gegenstand nach Fig. 1,
- Fig. 3: das Schema einer vollständigen Anlage zur Durchführung des erfindungsgemäßen Verfahrens und
- Fig. 4: eine andere Ausführungsform des Gegenstandes der Fig. 3.

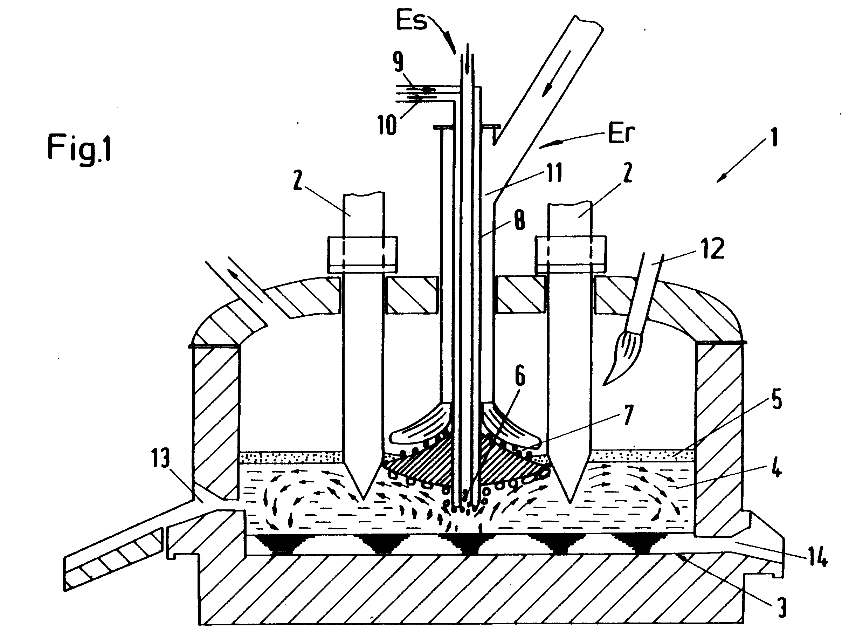

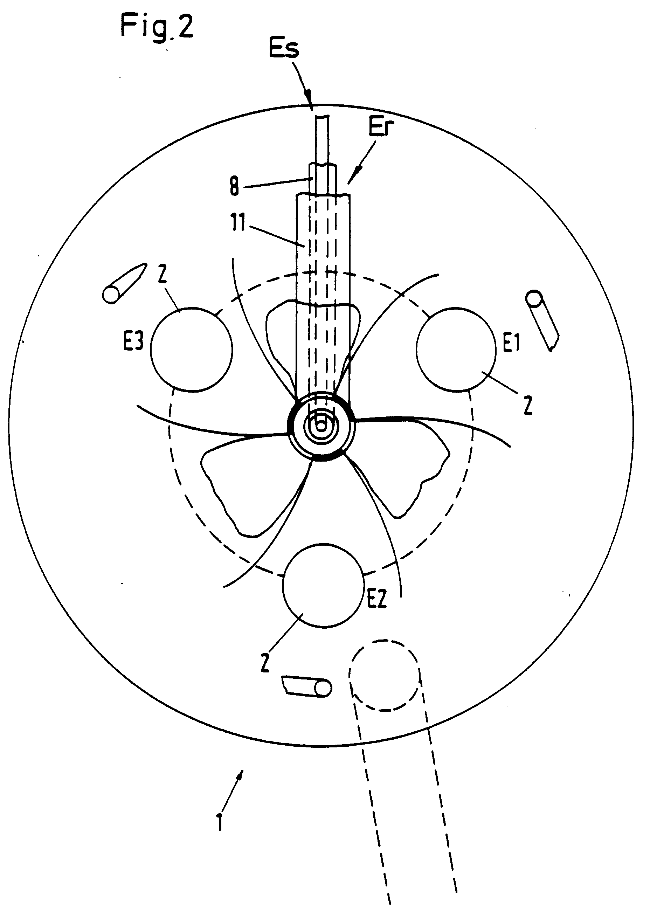

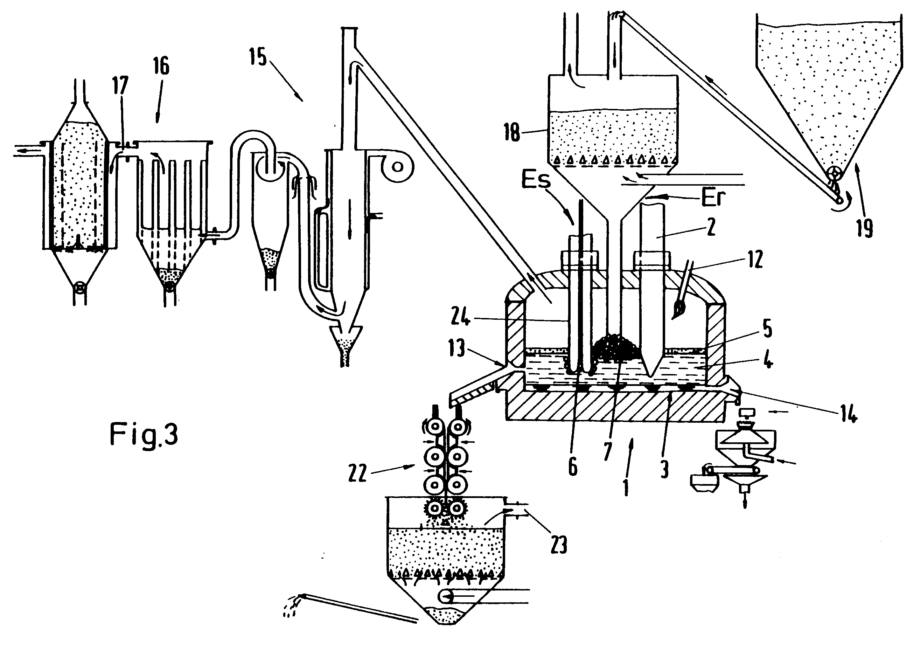

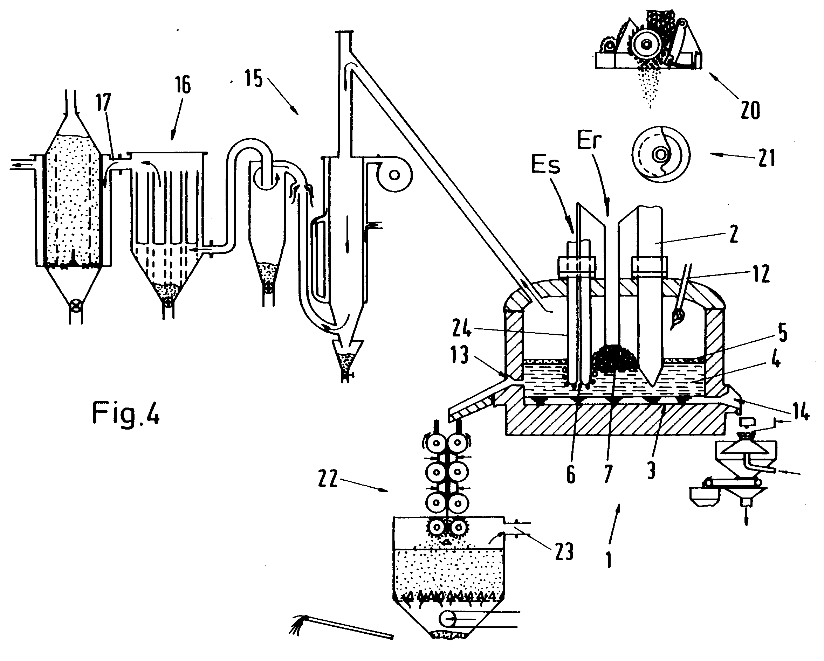

In den Figuren erkennt man einen Elektroniederschachtofen 1, der im Ausführungsbeispiel stets drei Elektroden 2 aufweist. Man erkennt über der Herdsohle 3 ein Schlackeschmelzbad 4 mit einer Koksabdeckung 5. In das Schlackeschmelzbad 4 tauchen die Elektroden 2 ein. Der Elektroniederschachtofen 1 ist für das erfindungsgemäße Verfahren und damit für das Einschmelzen von Staubeinschmelzgut 6 sowie von stückiger Rostschlacke 7 eingerichtet. Im Ausführungsbeispiel nach den Fig. 3 und 4 wird das Staubeinschmelzgut 6 mit Hilfe einer hohlen Tauchelektrode 24 in das Schlackeschmelzbad 4 eingeführt. Bei der Ausführungsform nach den Fig. 1 und 2 wird das Staubeinschmelzgut 6 mit Hilfe einer gekühlten Tauchlanze 8 eingeführt, die der entsprechenden Einrichtung Es angehört. Das Kühlwasser wird bei 9, 10 zu- bzw. abgeführt. Die Tauchlanze 8 ist bei den Fig. 1 und 2 von einem Förderrohr 11 umgeben, welches gleichsam als Möller-Rutsche für die Zuführung der Rostschlacke 7 dient und oberhalb des Schlackeschmelzbades 4 endet. Das Förderrohr 11 gehört der Einrichtung Er für die Zuführung der Rostschlacke 7 an.

Der Elektroniederschachtofen 1 wird unter reduzierenden Bedingungen im Schmelzeteil betrieben. Wie beschrieben wird dazu die Kohlenstoffbilanz eingerichtet. In den Elektroniederschachtofen kann Oxidationsluft über besondere Einführungseinrichtungen 12 eingeführt werden. Bei der Ausführungsform nach den Fig. 1 und 2 kann dieses auch zusammen mit der Zuführung der Rostschlacke 7 über das schon beschriebene Förderrohr 11 erfolgen.

Der Elektroniederschachtofen 1 besitzt eine Einrichtung 13, über die nach Maßgabe des Einschmelzvorganges die Schlacke kontinuierlich oder batchweise abgezogen werden kann. Die unter dem Schlackeschmelzbad 4 sich ansammelnde Metallschmelze wird nach Maßgabe des Einschmelzvorganges über eine entsprechende Einrichtung 14 kontinuierlich oder batchweise abgezogen.

Im Ausführungsbeispiel ist der Elektroniederschachtofen 1 ein Dreielektrodenofen, der mit Drehstrom betrieben wird. Daß der Elektroniederschachtofen zusätzlich bodenblasende Düsen aufweisen kann, wurde nicht gezeichnet.

Die Fig. 3 und 4 zeigen Einzelheiten für die Abgasreinigung und die Abwärmeverwertung. Man erkennt, daß das heiße Abgas aus dem Elektroniederschachtofen 1 über einen Wärmetauscher 15 und eine Abgasreinigungsanlage 16 geführt und danach in die Atmosphäre abgeblasen werden kann. Die über den Wärmetauscher 15 gewonnene Wärmeenergie wird zur Vorwärmung der Rostschlacke 7 verwendet. Insoweit wird insbesondere auf die Fig. 3 verwiesen. Man erkennt, daß in den Wärmetauscher 15 Kaltluft eingeführt und aus dem Wärmetauscher 15 Heißluft abgezogen wird. Sie wird in den Rostschlackevorwärmer 16 eingeführt, wo sie bodenseitig eintritt. Die dadurch entstehenden Brüden gehen bei 17 ab. Die Rostschlacke 7 selbst wird bei der Ausführungsform nach Fig. 3 zunächst in einem Rostschlackebunker 18 gesammelt, dem sie über einen Brecher 19 zugeführt wird. Es mag sich hier um nasse Rostschlacke handeln. In der Fig. 4 ist die Darstellung nach Fig. 3 abgebrochen, angedeutet wurden ein Einwalzenbrecher 20 für die Rostschlacke 7 und ein Trommelmagnetabscheider 21. In den Fig. 3 und 4 erkennt man fernerhin, daß die aus dem Elektroniederschachtofen 1 abgezogene Schlacke in einer Kühleinrichtung 22 gekühlt und die dabei von dem Kühlmittel aufgenommene Wärmeenergie bei 23 abgeführt wird. Sie kann ebenfalls zur Vorwärmung der Rostschlacke 7 bzw. des Staubeinschmelzgutes 6 verwendet werden.

## Patentansprüche

1. Verfahren zum simultanen Einschmelzen von Staubeinschmelzgut und von stückiger Rostschlacke aus Müllverbrennungsanlagen in einem geschlossenen Elektroniederschachtofen, der über seiner Herdsohle ein Schlackeschmelzbad mit einer Koksabdeckung aufweist, in welches Schlackeschmelzbad zumindest eine Elektrode eintaucht, mit den folgenden Verfahrensschritten:
a) Das Staubeinschmelzgut wird mit Hilfe einer hohlen Tauchelektrode und/oder einer Tauchlanze in das Schlackeschmelzbad eingetragen,
b) die Rostschlacke wird mit Hilfe eines Förderrohres, welches oberhalb des Schlackeschmelzbades endet, in den Elektroniederschachtofen eingebracht,
c) der Elektroniederschachtofen wird unter reduzierenden Bedingungen im Schmelzteil betrieben,
wobei zur Aufrechterhaltung der reduzierenden Bedingungen im Schmelzteil mit einer Kohlenstoffbilanz gearbeitet wird, welche den Kohlenstoff, den das Staubeinschmelzgut und/oder die Rostschlacke mitbringen, und erforderlichenfalls eine Kohlenstoffzugabe berücksichtigt, und wobei die Massenverhältnisse so eingestellt werden, daß das Schlackeglaseluat (nach Verbringen der Schlacke in eine Deponie) den Bestimmungen der Trinkwasserverordnung-Trink V vom 22.05.1986 (Bundesgesetzblatt vom 5.12.1990) genügen.

2. Verfahren nach Anspruch 1, wobei das Staubeinschmelzgut einerseits und die Rostschlacke andererseits etwa im Verhältnis 1:10 in den Elektroniederschachtofen eingeführt werden.

3. Verfahren nach einem der Ansprüche 1 oder 2, wobei das Schlackeschmelzbad mit einer Feinkoksschicht von zumindest 50 mm Schichtdicke abgedeckt wird.

4. Verfahren nach einem der Ansprüche 1 bis 3, wobei in den Oberofen, oberhalb der Koksabdeckung, Oxidationsluft eingeführt und dadurch oxidierbare Bestandteile der Ofenatmosphäre oxidiert oder teiloxidiert werden.

5. Verfahren nach einem der Ansprüche 1 bis 4, wobei nach Maßgabe des Verbrauchs des Kohlenstoffs in der Koksabdeckung Koks zusammen mit der Rohschlacke nachgespeist wird.

6. Verfahren nach einem der Ansprüche 1 bis 5, wobei dem Schlackeschmelzbad nach Maßgabe des Einschmelzvorganges Schlacke kontinuierlich oder batchweise abgezogen wird.

7. Verfahren nach einem der Ansprüche 1 bis 6, wobei eine unter dem Schlackeschmelzbad sich ansammelnde Metallschmelze nach Maßgabe des Einschmelzvorganges kontinuierlich oder batchweise abgezogen wird.

8. Verfahren nach einem der Ansprüche 1 bis 7, wobei mit einem Dreielektrodenofen mit Drehstrom gearbeitet wird.

9. Verfahren nach einem der Ansprüche 1 bis 7, wobei mit Wechselstrom sowie einem Zweielektrodenofen oder einem Einelektrodenofen gearbeitet wird.

10. Verfahren nach einem der Ansprüche 1 bis 9, wobei mit einem Elektroniederschachtofen gearbeitet wird, der zusätzlich bodenblasende Düsen aufweist.

11. Verfahren nach einem der Ansprüche 1 bis 10, wobei das heiße Abgas aus dem Elektroniederschachtofen über einen Wärmetauscher und eine Abgasreinigungsanlage geführt sowie danach abgeblasen wird und wobei die über den Wärmetauscher gewonnene Wärmeenergie zur Vorwärmung der Rostschlacke verwendet wird.

12. Verfahren nach einem der Ansprüche 1 bis 11, wobei die aus dem Elektroniederschachtofen abgezogene Schlacke gekühlt und die dabei vom Kühlmittel aufgenommene Wärmeenergie zur Vorwärmung der Rostschlacke verwendet wird.

13. Anlage für die Durchführung des Verfahrens nach einem der Ansprüche 1 bis 12 mit einem geschlossenen Elektroniederschachtofen (1) mit
zumindest einer Elektrode (2), die in das Schlackeschmelzbad (4) eintaucht, und einer Einrichtung (Es) zur dosierten Zuführung des Staubeinschmelzgutes (6),
zumindest einer Einrichtung (Er) zur dosierten Zuführung der stückigen Rostschlacke (7),
wobei die Einrichtung (Es) für die Zuführung des Staubeinschmelzgutes (6) eine Tauchlanze (8) aufweist und die Einrichtung (Er) für die Zuführung der stückigen Rostschlacke (7) mit einem Förderrohr (11) ausgerüstet ist, welches oberhalb des Schlackeschmelzbades (4) endet,
wobei die Einrichtung (Es) zur Zuführung des Staubeinschmelzgutes (6) und die Einrichtung (Er) für die Zuführung der Rostschlacke (7) simultan betrieben werden,
wobei die Tauchlanze (8) der Einrichtung (Es) für die Zuführung des Staubeinschmelzgutes (6) von dem Förderrohr (11) für die Rostschlacke (7) konzentrisch umgeben ist und wobei das Aggregat aus Tauchlanze (8) und Förderrohr (11) im Zentrum des Elektroniederschachtofens (1) angeordnet und von drei Elektroden (2), die ein gleichseitiges Dreieck aufspannen, umgeben ist.

## Claims

1. Process for the simultaneous melting of powdery products and lump slags from refuse incineration plants in a closed electric low-shaft furnace, which has above its hearth base a slag melt bath with a coke covering, into which slag melt bath at least one electrode is immersed, comprising the following stages:
a) the powdery product is charged into the slag melt bath by means of a hollow immersion electrode and/or an immersion lance,
b) the clinker is introduced into the electric low-shaft furnace by means of a conveyor tube which ends above the slag melt bath,
c) the electric low-shaft furnace is operated in the melt part under reducing conditions,
wherein in order to maintain the reducing conditions in the melt part, a carbon balance is used which takes into account the carbon brought in by the powdery product and/or the clinker and if necessary the addition of carbon, and wherein the mass ratios are so set that the slag glass eluate (after the slag has been transferred to a waste dump) meet the specifications of the German drinking water act V of 22.05.1986 (Federal statute-roll of 5.12.1990).

2. Process according to claim 1, wherein the powdery product on the one hand and the clinker on the other are introduced to the electric low-shaft furnace approximately in a ratio of 1:10.

3. Process according to either claim 1 or claim 2, wherein the slag melt bath is covered with a fine coke layer of at least 50 mm thickness.

4. Process according to one of claims 1 to 3, wherein oxidation air is introduced into the upper furnace above the coke covering and thereby oxidisable components of the furnace atmosphere are oxidised or partially oxidised.

5. Process according to one of claims 1 to 4, wherein according to the consumption of carbon in the coke covering, supplementary coke is supplied with the raw slag.

6. Process according to one of claims 1 to 5, wherein slag is drawn off the slag melt bath continuously or in batches according to the melting process.

7. Process according to one of claims 1 to 6, wherein a metal melt collecting under the slag melt bath is drawn off continuously or in batches according to the melting process.

8. Process according to one of claims 1 to 7, wherein the operation is carried out with a three-electrode furnace operating with three-phase current.

9. Process according to one of claims 1 to 7, wherein the operation is carried out with alternating current and a two-electrode furnace or a single-electrode furnace.

10. Process according to one of claims 1 to 9, wherein the operation is carried out with an electric low-shaft furnace which additionally has base-blowing nozzles.

11. Process according to one of claims 1 to 10, wherein the hot exhaust gas is passed out of the electric low-shaft furnace via a heat exchanger and an exhaust gas cleaning plant and is then blown into the atmosphere, the heat energy recovered via the heat exchanger being used to preheat the clinker.

12. Process according to one of clams 1 to 11, wherein the slag drawn off the electric low-shaft furnace is cooled and the heat energy then taken up by the coolant is used to preheat the clinker.

13. Plant for carrying out the process according to one of claims 1 to 12 with a closed electric low-shaft furnace (1) comprising:
at least one electrode (2), which is immersed in the slag melt bath (4), and a device (Es) for the metered supply of powdery product (6),
at least one device (Er) for the metered supply of lump clinker (7),
wherein the device (Es) for the supply of powdery product (6) has an immersion lance (8) and the device (Er) for supplying the lump clinker (7) is equipped with a conveyor tube (11), which ends above the slag melt bath (4),
wherein the device (Es) for supplying the powdery product (6) and the device (Er) for supplying the clinker (7) are operated simultaneously,
wherein the immersion lance (8) of the device (Es) for supplying the powdery product (6) is concentrically surrounded by the conveyor tube (11) for the clinker (7)
and wherein the aggregate composed of the immersion lance (8) and conveyor tube (11) is disposed in the centre of the electric low-shaft furnace (1) and is surrounded by three electrodes (2) which span an equilateral triangle.

## Revendications

1. Procédé de fusion simultanée de matières pulvérulentes fusibles et de scories en morceaux provenant d'unités d'incinération d'ordures ménagères dans un bas fourneau électrique fermé, comportant au-dessus de sa sole de foyer un bain de scories en fusion recouvert de coke, dans lequel bain de scories en fusion est immergée au moins une électrode, avec les phases de procédé suivantes :
a) les matières pulvérulentes fusibles sont introduites dans le bain de scories en fusion au moyen d'une électrode de plongée creuse et/ou d'une lance de plongée,
b) les scories sont introduites dans le bas fourneau électrique à l'aide d'un tube d'alimentation qui se termine au-dessus du bain de scories en fusion,
c) le bas fourneau électrique fonctionne dans des conditions réductrices dans la partie en fusion,
une teneur en carbone étant utilisée pour assurer le maintien des conditions réductrices dans la partie en fusion, laquelle tient compte du carbone des matières pulvérulentes fusibles et/ou des scories, et, si nécessaire, d'un ajout de carbone, et les rapports massiques étant réglés de telle sorte que l'éluat vitrifié des scories soit conforme (après la mise en décharge des scories) aux dispositions du décret relatif à l'eau potable Trink (Boire) V du 22.05.1986 (journal officiel fédéral du 5.12.1990).

2. Procédé suivant la revendication 1, selon lequel les matières pulvérulentes fusibles, d'une part, et les scories en morceaux, d'autre part, sont introduites dans le bas fourneau électrique dans un rapport de l'ordre de 1 : 10.

3. Procédé suivant l'une des revendications 1 ou 2, selon lequel le bain de scories en fusion est recouvert d'une couche de coke granulé d'une épaisseur d'au moins 50 mm.

4. Procédé suivant l'une des revendications 1 à 3, selon lequel de l'air d'oxydation est introduit dans la partie supérieure du four au-dessus du recouvrement de coke, au moyen duquel des composés oxydables de l'atmosphère du four sont oxydés ou partiellement oxydés.

5. Procédé suivant l'une des revendications 1 à 4, selon lequel un appoint de coke est effectué avec les scories en fonction de la consommation de carbone dans le recouvrement de coke.

6. Procédé suivant l'une des revendications 1 à 5, selon lequel des scories sont soutirées de façon continue ou discontinue du bain de scories en fusion en fonction du processus de fusion.

7. Procédé suivant l'une des revendications 1 à 6, selon lequel une masse métallique en fusion s'accumulant sous le bain de scories en fusion est soutirée de façon continue ou discontinue en fonction du processus de fusion.

8. Procédé suivant l'une des revendications 1 à 7, selon lequel il est utilisé un four à trois électrodes fonctionnant avec du courant triphasé.

9. Procédé suivant l'une des revendications 1 à 7, selon lequel il est utilisé du courant alternatif, ainsi qu'un four à deux électrodes ou un four à une électrode.

10. Procédé suivant l'une des revendications 1 à 9, selon lequel il est utilisé un bas fourneau électrique comportant des buses supplémentaires de soufflage de fond.

11. Procédé suivant l'une des revendications 1 à 10, selon lequel les gaz d'échappement chauds sont évacués du bas fourneau électrique par l'intermédiaire d'un échangeur de chaleur et d'une installation d'épuration des gaz d'échappement, et rejetés ensuite, et selon lequel l'énergie thermique récupérée par l'intermédiaire de l'échangeur de chaleur est utilisée pour le préchauffage des scories.

12. Procédé suivant l'une des revendications 1 à 11, selon lequel les scories soutirées du bas fourneau électrique sont refroidies, et selon lequel l'énergie thermique absorbée en l'occurrence par l'agent de refroidissement est utilisée pour le préchauffage des scories.

13. Installation destinée à la mise en oeuvre du procédé suivant l'une des revendications 1 à 12 avec un bas fourneau électrique fermé (1), comportant au moins une électrode (2), qui est immergée dans le bain de scories en fusion (4), et un dispositif (Es) destiné à l'amenée dosée des matières pulvérulentes fusibles (6),
au moins un dispositif (Er) destiné à l'amenée dosée des scories (7) en morceaux,
le dispositif (Es) destiné à l'amenée des matières pulvérulentes fusibles (6) comportant une lance de plongée (8), et le dispositif (Er) destiné à l'amenée des scories (7) en morceaux étant équipé d'un tube d'alimentation (11), qui se termine au-dessus du bain de scories en fusion (4),
le dispositif (Es) destiné à l'amenée des matières pulvérulentes fusibles (6) et le dispositif (Er) destiné à l'amenée des scories (7) fonctionnant simultanément,
la lance de plongée (8) du dispositif (Es) destiné à l'amenée des matières pulvérulentes fusibles (6) étant entourée de façon concentrique par le tube d'alimentation (11) des scories (7), et le dispositif constitué de la lance de plongée (8) et du tube d'alimentation (11) étant disposé au centre du bas fourneau électrique (1), et étant entouré de trois électrodes (2) qui définissent un triangle équilatéral.
